# EUROPEAN PATENT APPLICATION

(11) **EP 4 789 892 A1**
(43) Date of publication of application: **12.08.2026**
(21) Application number: 26151732.0
(22) Date of filing: 14.01.2026
(51) Int. Cl.: B60K 35/23, B60K 35/235, B60K 35/26, G06F 40/58, G08G 1/0962

(54) **VEHICLE TRANSLATION INFORMATION PROJECTION SYSTEM AND TRANSLATION INFORMATION PROJECTION METHOD FOR THE SYSTEM**

(30) Priority: 29.01.2025 JP 2025012929
(71) Applicant: Toyota Jidosha Kabushiki Kaisha, Toyota-shi, Aichi-ken 471-8571 (JP)
(72) Inventor: SHENOY, Anil, Chuo-Ku, 103-0022 (JP)
(74) Representative: D Young & Co LLP

(57) **Abstract**

A vehicle translation information projection system to be mounted in a vehicle includes a language recognition unit configured to recognize a language displayed on a traffic display object in an image captured by a front camera of the vehicle, a translation processing unit configured to translate language content different from a user language on the traffic display object into user language content when the language displayed on the traffic display object is different from a preset user language, and a projection display unit configured to project information onto a windshield of the vehicle, wherein the projection display unit projects the user language content onto the windshield such that it is positioned on or near the traffic display object as viewed from a driver of the vehicle.

## Description

### CROSS-REFERENCE TO RELATED APPLICATIONS

This application is based upon and claims the benefit of priority from Japanese Patent Application No. 2025-012929, filed on January 29, 2025, the entire contents of which are incorporated herein by reference.

### TECHNICAL FIELD

The present disclosure relates to a vehicle translation information projection system and a translation information projection method for the vehicle translation information projection system.

### BACKGROUND

In the related art, Japanese Unexamined Patent Application Publication No. 2013-068620 is known as a technical document related to a vehicle translation information projection system. This publication discloses a system that translates a language included in a captured image of a sign, a road sign, or another object viewed by a driver of a vehicle into a second language and displays the translated language on a display unit.

### SUMMARY

In a conventional system, a translation result of a sign that a driver is viewing is displayed on a display device such as a center display. In such a conventional system, the driver needs to shift their gaze to the center display to check the translation result of the sign being viewed, and there is a possibility that the driver's attention may be distracted.

One aspect of the present disclosure is a vehicle translation information projection system mounted in a vehicle. The vehicle translation information projection system includes a language recognition unit, a translation processing unit, and a projection display unit. The language recognition unit is configured to recognize a language displayed on a traffic display object in an image captured by a front camera of the vehicle. When the language displayed on the traffic display object is different from a preset user language, the translation processing unit is configured to translate language content different from the user language on the traffic display object into user language content. The projection display unit is configured to project information onto a windshield of the vehicle. The projection display unit projects the user language content onto the windshield such that it is positioned on or near the traffic display object as viewed from a driver of the vehicle.

According to the vehicle translation information projection system of one aspect of the present disclosure, when a language displayed on a traffic display object is different from a user language, translated user language content is projected onto the windshield on or near the traffic display object as viewed from the driver. This allows the driver to understand the content of the traffic display object indicated in a different language without significantly averting their gaze from the front of the vehicle.

In the vehicle translation information projection system according to one aspect of the present disclosure, the traffic display object may include at least one of a road sign, a road work sign, a traffic information board, and a road marking.

In the vehicle translation information projection system according to one aspect of the present disclosure, the projection display unit may project the user language content onto the windshield by superimposing it over and masking the language portion different from the user language in the traffic display object as viewed from the driver.

In the vehicle translation information projection system according to one aspect of the present disclosure, the system may further include a voice recognition unit configured to recognize speech spoken toward the driver from outside the vehicle while the vehicle is stopped, and the projection display unit may project the speech recognized by the voice recognition unit as text in the user language onto the windshield.

Another aspect of the present disclosure is a translation information projection method of a vehicle translation information projection system mounted in a vehicle. The translation information projection method for the vehicle translation information projection system includes: recognizing a language displayed on a traffic display object in an image captured by a front camera of the vehicle, translating language content different from a user language on the traffic display object into user language content when the language displayed on the traffic display object is different from a preset user language, and projecting the user language content onto the windshield of the vehicle such that it is positioned on or near the traffic display object as viewed from a driver of the vehicle.

According to the translation information projection method for the vehicle translation information projection system of another aspect of the present disclosure, when a language displayed on a traffic display object is different from a user language, translated user language content is projected onto the windshield on or near the traffic display object as viewed from the driver. This allows the driver to understand the content of the traffic display object indicated in a different language without significantly averting their gaze from the front of the vehicle.

According to each aspect of the present disclosure, a driver can understand in a user language the content of a traffic display object indicated in a different language without significantly averting their gaze from the front of the vehicle.

### BRIEF DESCRIPTION OF THE DRAWINGS

FIG. 1 is a block diagram illustrating a vehicle translation information projection system according to an embodiment.
FIG. 2 is a diagram illustrating an example of a translated display of a traffic information board when the user language is Japanese.
FIG. 3 is a diagram illustrating an example of a translated display of a traffic information board when the user language is English.
FIG. 4 is a diagram illustrating an example of masking of a translated display of a traffic information board.
FIG. 5 is a diagram for explaining an example of a voice translation display at a tollgate.
FIG. 6 is a flowchart illustrating an example of a translation information projection process of the vehicle translation information projection system.
FIG. 7 is a flowchart illustrating an example of a voice translation information projection process of the vehicle translation information projection system.

### DETAILED DESCRIPTION

Hereinafter, embodiments of the present disclosure will be described with reference to the drawings.

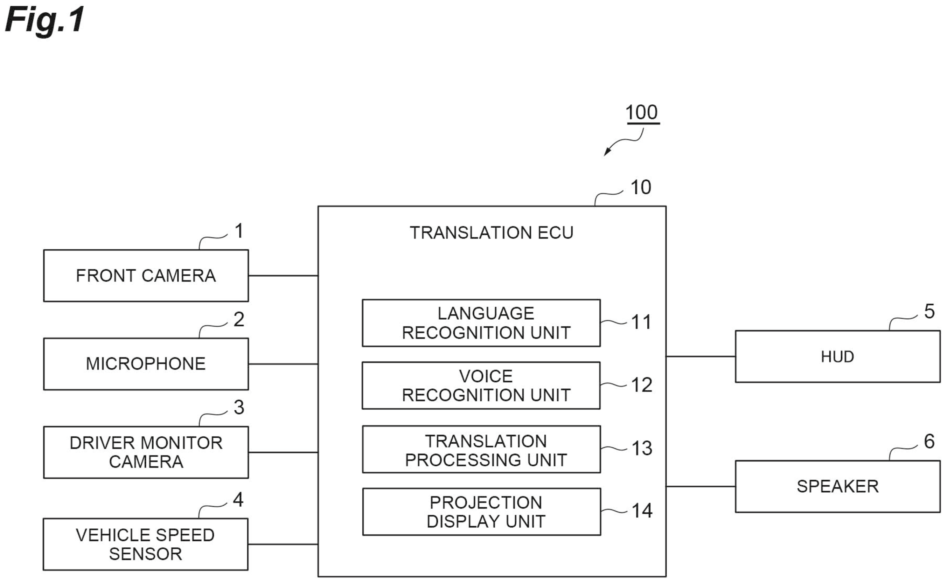

The vehicle translation information projection system 100 shown in FIG. 1 is a system that is mounted in a vehicle and assists a driver in understanding the meaning of a traffic display object displayed in a language other than a user language. The user language is a language preset by the driver for the system. The user language is set to a language that the driver can understand, such as the driver's native language.

The traffic display object is an object captured by the front camera 1 of the vehicle, and includes at least one of a road sign, a road work sign, a traffic information board, a road marking, and the like. These traffic display objects provide traffic information to the driver, and it is desirable that they are understood by the driver across language barriers.

A road sign is a sign installed to provide a driver with information such as regulations, instructions, warnings, and guidance regarding road traffic. Specific examples include a "Maximum Speed" sign indicating a speed limit, a "Stop" sign instructing a temporary stop, a "No Entry" sign indicating entry prohibition, a "Road Closed to Vehicles" sign indicating that vehicles are not allowed to pass, and "Right Turn Permitted" or "Left Turn Permitted" signs indicating whether a right or left turn is possible. These signs are distinguished by shape, color, and symbols, and are designed to be instantly understood by the driver.

A road work sign is a sign installed to inform a driver of temporary changes in traffic conditions, such as road construction or maintenance work. Specific examples include a "Road Work Ahead" sign indicating that construction is in progress, a "Alternating One-Way Traffic" sign indicating alternating one-way traffic, a "Lane Reduction" sign informing of a lane reduction, a "Detour" sign guiding to a detour route, and a "Slow Down" sign urging speed reduction. These signs enhance visibility by using bright colors, flashing lights, and the like to alert drivers.

A traffic information board is an electronic display board installed on expressways or major roads, and is a device that provides real-time traffic information to a driver. As specific information, "Traffic Jam 5 km Ahead" indicating a traffic jam situation, "Accident" indicating an accident, "Fog Warning" or "Icy Road Warning" indicating weather conditions, and "Road Closed" or "Lane Restriction" as road regulation information are displayed. The traffic information board may convey information intuitively not only with text information but also by using symbols and pictograms.

A road marking is a marking drawn directly on the paved surface of a road and provides a driver with information such as the direction of travel and traffic regulations. Specific examples include "arrow markings" indicating the direction of travel, a "stop line" indicating a stopping position, a "pedestrian crossing" indicating a pedestrian crosswalk, "lane separation lines" or "no lane change lines" indicating lane boundaries, and "speed markings" indicating speed regulations. In addition, there are also "Bus Only" and "Bicycle Only" markings indicating lanes that only specific vehicles can use. For road markings, reflective materials or fluorescent paint are often used to enhance visibility at night or in bad weather.

### [Configuration of the Vehicle Translation Information Projection System]

The vehicle translation information projection system 100 includes a translation ECU (Electronic Control Unit) 10. The translation ECU 10 is an electronic control unit having a CPU (Central Processing Unit) and a storage unit. The storage unit is composed of, for example, a ROM (Read Only Memory), a RAM (Random Access Memory), an EEPROM (Electrically Erasable Programmable Read-Only Memory), and the like. In the translation ECU 10, for example, various functions are realized by the CPU executing a program stored in the storage unit. The translation ECU 10 may be composed of a plurality of electronic units.

As illustrated in FIG. 1, the translation ECU 10 is connected to a front camera 1, a microphone 2, a driver monitor camera 3, a vehicle speed sensor 4, a HUD 5, and a speaker 6.

The front camera 1 is an imaging device that captures an image of the front of the vehicle. The front camera 1 is provided, for example, behind the windshield of the vehicle. The front camera 1 transmits a captured image of the scene in front of the vehicle to the translation ECU 10.

The microphone 2 is a voice input device provided to collect voice from outside the vehicle. The microphone 2 is arranged, for example, on the exterior of the vehicle body, such as near the driver's side door mirror or on a door panel, and is configured to be able to accurately pick up speech spoken from outside the vehicle while the vehicle is stopped. The microphone 2 may be provided inside the vehicle cabin.

The microphone 2 is provided with a noise canceling function for reducing the influence of ambient noise and wind noise. In addition, it has waterproof and dustproof performance and is designed to withstand the external environment of the vehicle. This makes it possible to stably acquire voice even under various weather conditions.

The driver monitor camera 3 is a camera for capturing an image of the driver. The driver monitor camera 3 can be a digital camera having an image sensor such as a CCD (Charge Coupled Device) or a CIS (CMOS Image Sensor). The driver monitor camera 3 is provided, for example, on a cover of a steering column in front of the driver, and captures an image of the driver's head including the face at a predetermined frame rate.

The placement location of the driver monitor camera 3 is not limited to the cover of the steering column, and it may be placed at a position where the driver's face and eyes can be photographed from the front, such as near the rearview mirror in the vehicle or on the upper part of the dashboard. The driver monitor camera 3 transmits a captured image of the driver to the translation ECU 10. In addition, the driver monitor camera 3 has a function of detecting the driver's line of sight, facial expression, and head movement. This allows the projection display unit 14, which will be described later, to adjust the display position and angle of the projected user language content in real time according to the driver's line-of-sight position and posture.

The vehicle speed sensor 4 is a sensor for detecting the traveling speed of the vehicle. The vehicle speed sensor 4 is composed of a wheel speed sensor, a speed detection device incorporated in a transmission, or the like, and transmits vehicle speed information to the translation ECU 10.

The vehicle speed information obtained from the vehicle speed sensor 4 is utilized by a voice recognition unit 12 and a projection display unit 14, which will be described later. For example, when it is detected that the vehicle is stopped, the voice recognition unit 12 accepts voice input from the outside. On the other hand, when the vehicle is traveling, the projection display unit 14 may optimize the timing and position of the display content according to the vehicle speed and control it so that the driver can appropriately check the information.

The HUD 5 (Head Up Display) is a display device that projects information onto the windshield of the vehicle, allowing the driver to acquire necessary information without significantly moving their line of sight. The HUD 5 is composed of a projection unit incorporated in the dashboard and a reflective surface provided on the windshield.

The HUD 5 is provided with, for example, a high-brightness projection system and is capable of clear display regardless of day or night or weather. In addition, it has a function of adjusting the projection position and focal length, so that information is displayed at a position that is easy to see according to the driver's seat position and line-of-sight angle. Furthermore, it performs distortion correction and color correction of the display content to provide accurate information.

The speaker 6 is an acoustic device for outputting voice guidance and warning sounds. The speaker 6 is arranged, for example, on the dashboard or a door panel in the vehicle, and a high-quality sound system is adopted so as to be able to provide appropriate voice to the driver.

The speaker 6 may be capable of reproducing a voice output in the user language from the translation processing unit 13. The speaker 6 may also be configured to provide voice guidance for alerts and navigation information from the system by voice.

Next, a functional configuration of the translation ECU 10 will be described. As illustrated in FIG. 1, the translation ECU 10 includes a language recognition unit 11, a voice recognition unit 12, a translation processing unit 13, and a projection display unit 14.

The language recognition unit 11 is configured to recognize a language displayed on a traffic display object in an image acquired from the front camera 1. This language includes the user language and languages other than the user language. Specifically, high-precision character recognition is achieved by using a combination of image analysis technology and optical character recognition (OCR) technology. First, as preprocessing of the image, noise removal, contrast correction, and brightness adjustment are performed to bring the image into a state suitable for extracting character information. Next, edges and line segments of characters are detected by a feature extraction algorithm to identify a character region.

After the character region is identified, each character is converted into digital text data by an OCR engine. At this time, collation with a large-scale language database is performed in order to support a plurality of languages and fonts. A machine learning model is utilized for the collation, and it may be designed to adaptively maintain recognition accuracy even when a new language or font is added. The language recognition unit 11 is not limited to a machine learning model, and may be in a mode of recognizing the language on the traffic display object by a well-known image processing method. The language recognition unit 11 determines whether or not the traffic display object includes a language other than the user language. It should be noted that the function of the language recognition unit 11 may be executed on an external server.

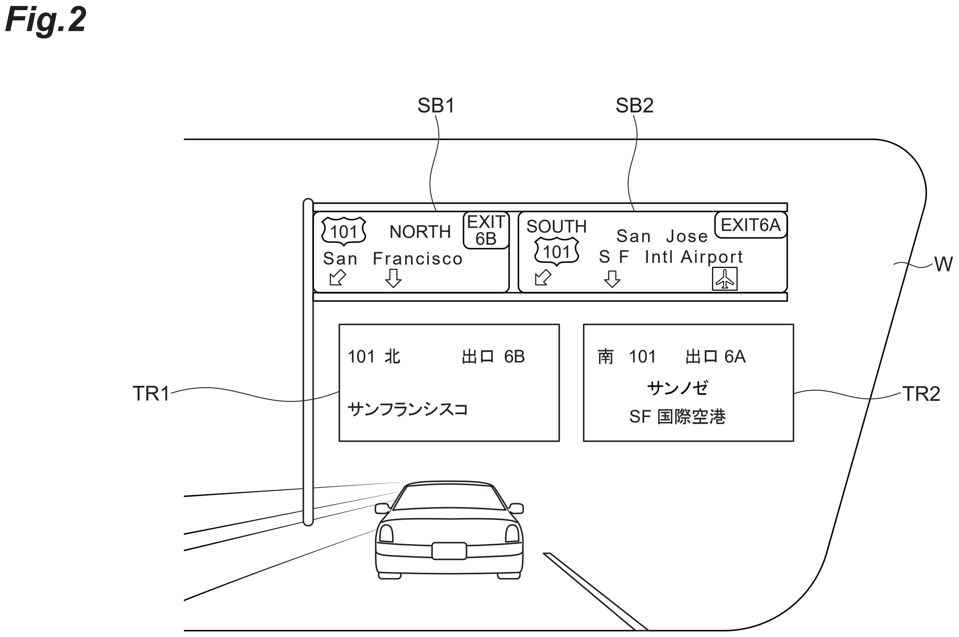

FIG. 2 is a diagram illustrating an example of a translated display of a traffic information board when the user language is Japanese. FIG. 2 shows a first traffic information board SB1 and a second traffic information board SB2 in front of the vehicle. The first traffic information board SB1 and the second traffic information board SB2 are traffic information boards (traffic display objects) provided on a road. FIG. 2 also shows a windshield W of the vehicle, a first user language content display TR1, and a second user language content display TR2, which will be used in a later description.

The language recognition unit 11 recognizes the language of the first traffic information board SB1 and the language of the second traffic information board SB2 from the captured image shown in FIG. 2. The language recognition unit 11 recognizes language content such as "NORTH", "San Francisco", and "EXIT" described on the first traffic information board SB1. Similarly, the language recognition unit 11 recognizes language content such as "SOUTH"," San Jose", "S F Intl Airport", and "EXIT" described on the second traffic information board SB2. It is assumed that these languages are English and are different from Japanese which is the preset user language. Note that the language recognition unit 11 may be in a mode of recognizing the language content in combination with numerical values such as "101" and symbols such as arrows.

The voice recognition unit 12 has a function of analyzing a voice signal acquired via the microphone 2 while the vehicle is stopped and converting the content thereof into text data. Whether or not the vehicle is stopped is determined based on the vehicle speed information from the vehicle speed sensor 4. Not only when the vehicle speed indicates a complete stop, but it may also be determined that the vehicle is stopped if the vehicle speed is below a certain speed. It may be possible to recognize voice guidance from a police officer or a traffic controller outside the vehicle while the vehicle is moving slowly.

The voice recognition unit 12 analyzes a voice signal using an acoustic model and a spoken language model. First, an acquired analog voice signal is converted into a digital signal, and frequency analysis is performed to extract voice features. These features are collated with the acoustic model, and recognition is performed in units of phonemes and syllables.

Subsequently, based on the spoken language model, the recognized phonemes and syllables are combined to form words and sentences. The voice recognition unit 12 is also provided with signal processing technologies such as background noise removal and echo cancellation, and is designed to maintain high recognition accuracy even in a noisy environment around the vehicle.

The translation processing unit 13 has a function of translating text data acquired from the language recognition unit 11 and the voice recognition unit 12 into the user language. The translation processing unit 13 translates language content other than the user language of the traffic display object recognized by the language recognition unit 11 into user language content. The language content is character information displayed on the traffic display object. The language content includes, for example, at least one of text on a road sign, guidance text on a road work sign, display content on a traffic information board, and character information on a road marking. The user language content is language content translated into the user language.

The translation processing unit 13 is equipped with, for example, a machine translation model using a neural network, and realizes natural translation that takes context and phrasing into account. Specifically, it uses a deep learning model with an encoder-decoder structure to convert input text into an internal representation and then generate translated text in the user language.

The translation processing unit 13 may refer to a dictionary database or a parallel corpus for translating technical terms and proper nouns. In addition, the translation processing unit 13 may be configured to perform updates by continuously acquiring the latest translation dataset from an external network to perform updates. Note that the function of the translation processing unit 13 may be executed on an external server.

The translation processing unit 13 performs, for example, translation of the language content of the first traffic information board SB1 and the language content of the second traffic information board SB2 recognized by the language recognition unit 11 in FIG. 2. The translation processing unit 13 translates, for example, language content (English) such as "NORTH", "San Francisco", and "EXIT" on the first traffic information board SB1 into user language content (Japanese) such as " 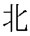 ", " 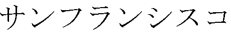 ", and " 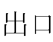 ".

The projection display unit 14 has a function of transmitting the user language content obtained from the translation processing unit 13 to the HUD 5 and projecting the information onto the windshield W. The projection display unit 14 is configured to control the display position and display format of the translation information so that the driver can visually recognize the necessary information without significantly moving their line of sight.

The projection display unit 14 projects the user language content such that it is superimposed on or near the traffic display object as viewed from the driver, based on the position of the driver's face and eyes captured by the driver monitor camera 3 and the position of the language portion other than the user language of the traffic display object recognized by the language recognition unit 11.

Since the positional relationship between the traveling vehicle and the traffic display object changes over time, the projection display unit 14 adjusts the projection position of the user language content based on the temporal change in the position of the traffic display object as viewed from the driver. The projection display unit 14 predicts the position of the traffic display object after a predetermined time based on the vehicle speed information from the vehicle speed sensor 4, and adjusts the projection position of the user language content.

The projection display unit 14 may be in a mode of predicting the position of the traffic display object after a predetermined time based on a steering angle detected by a steering sensor or a yaw rate detected by a yaw rate sensor. The projection display unit 14 may be in a mode of re-detecting the position of the driver's face and eyes captured by the driver monitor camera 3 at regular intervals or each time the longitudinal position of the driver's seat is adjusted or the seat belt is fastened or unfastened, and use the re-detected position to adjust the projection position of the user language content.

Specifically, the projection display unit 14 analyzes the position information of the traffic display object acquired from the front camera 1 in real time, and controls the projection position so that the user language content is superimposed on or near the traffic display object. "On the traffic display object" means a position where at least a part of the user language content overlaps with the traffic display object. "Near the traffic display object" means a position where the user language content enters the field of view of the driver who is visually recognizing the traffic display object. The user language content can be arranged at a position close enough to the traffic display object for the relationship between them to be understandable. This allows the driver to intuitively and quickly recognize the translated information without moving their line of sight.

As an example, the projection display unit 14 projects a first user language content display TR1 immediately below the first traffic information board SB1, which is a traffic display object, as shown in FIG. 2. The first user language content display TR1 includes Japanese content such as " 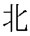 ", " 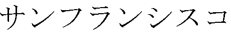 ", and te " 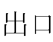 " translated by the translation processing unit 13. Similarly, the projection display unit 14 projects a second user language content display TR2 immediately below the second traffic information board SB2. The second user language content display TR2 includes Japanese content such as " 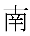 ", " 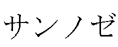 ", and " 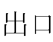 " translated by the translation processing unit 13.

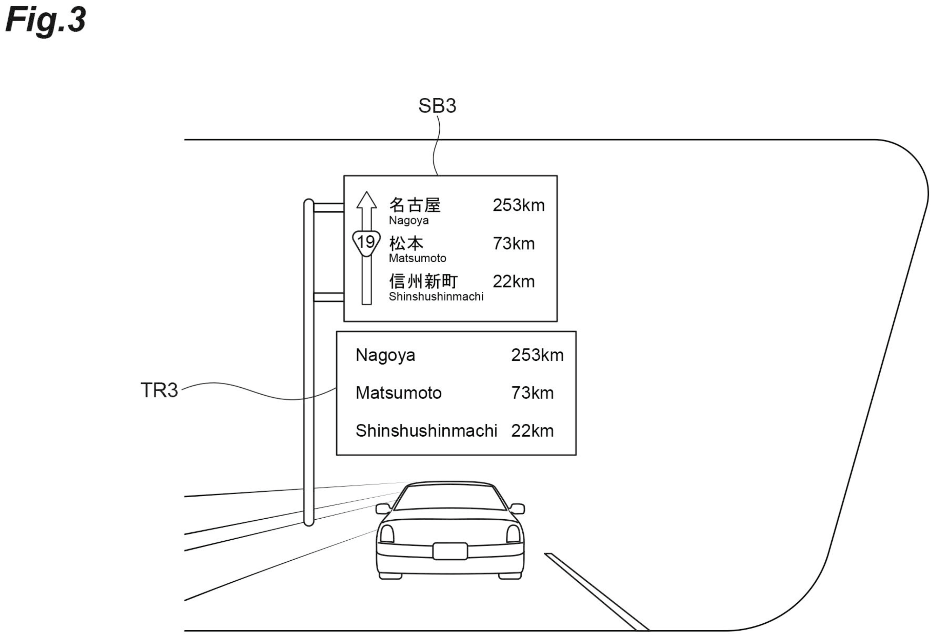

FIG. 3 is a diagram illustrating an example of a translated display of a traffic information board when the user language is English. FIG. 3 shows a third traffic information board SB3 with Japanese display and a third user language content display TR3 corresponding to the third traffic information board SB3. In the situation shown in FIG. 3, the language recognition unit 11 recognizes the language of the third traffic information board SB3 from the captured image shown in FIG. 3. The language recognition unit 11 recognizes language Japanese content such as " 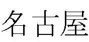 ", " 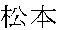 ", and " 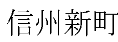 " described on the third traffic information board SB3. The translation processing unit 13 translates the language content recognized by the language recognition unit 11 into user language content (English) such as "Nagoya", "Matsumoto", and "Shinshushinmachi". The projection display unit 14 projects the user language content (English) such as "Nagoya", "Matsumoto", and "Shinshushinmachi" translated by the translation processing unit 13 onto the windshield W as a third user language content display TR3.

The display mode of the user language content by the projection display unit 14 is not limited to the modes shown in FIG. 2 and FIG. 3. The projection display unit 14 may project the user language content onto the windshield W by superimposing it on the language portion so as to mask the language portion different from the user language in the traffic display object as viewed from the driver.

Specifically, the projection display unit 14 adjusts the color tone and contrast of the user language content to be displayed, and effectively masks the original language portion. For example, by placing a background with adjusted opacity behind the user language content, the original language portion is covered. This allows the driver to acquire only the necessary information without being confused by unnecessary information. Note that the masking and the display of the user language content may be performed as independent processes.

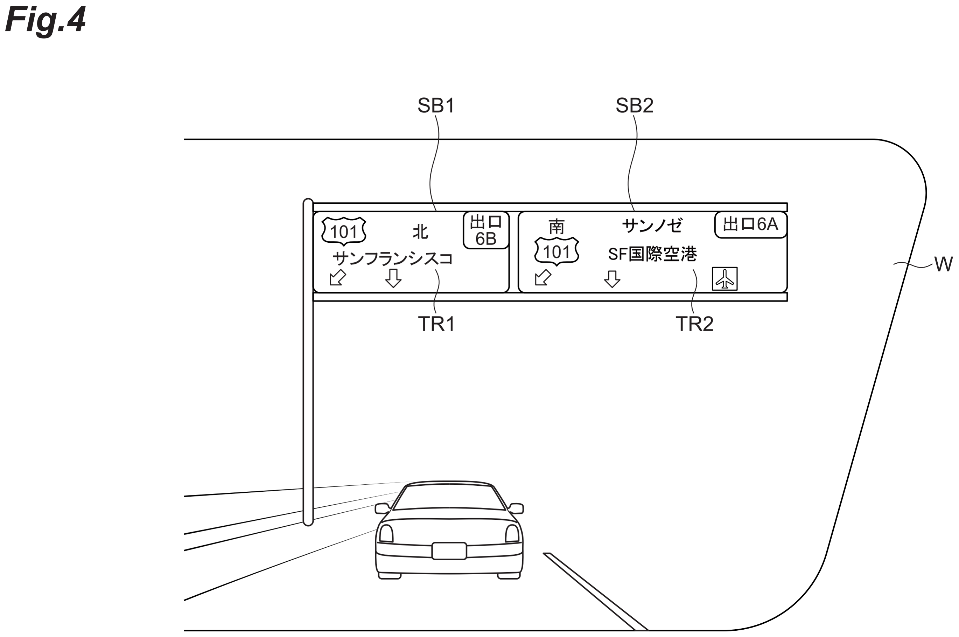

Here, FIG. 4 is a diagram illustrating an example of masking of a translated display of a traffic information board. In FIG. 4, the first user language content display TR1 is projected onto the windshield W so as to cover the language portion of the first traffic information board SB1 as viewed from the driver. Similarly, the second user language content display TR2 is projected onto the windshield W so as to cover the language portion of the second traffic information board SB2 as viewed from the driver.

The projection display unit 14 may have a function of adjusting the position, size, and brightness of the projected user language content in real time, also considering information such as the movement of the vehicle, the driver's line-of-sight position, and the seat position. To realize this function, the projection display unit 14 acquires position information of the language portion of the traffic display object provided from the language recognition unit 11. Based on this information, the projection display unit 14 performs control to project the user language content at a position that overlaps with the original language portion. Similarly, the projection display unit 14 may be in a mode of acquiring size information of the language portion of the traffic display object from the language recognition unit 11 and projecting the user language content in a similar size.

Note that when speech in a language different from the user language is detected by the voice recognition unit 12, the translation ECU 10 translates the speech into user language content by the translation processing unit 13. The projection display unit 14 projects the user language content corresponding to the speech spoken from the outside, for example, at a position in front of the driver on the windshield W or at an end of the windshield W on the driver's seat side.

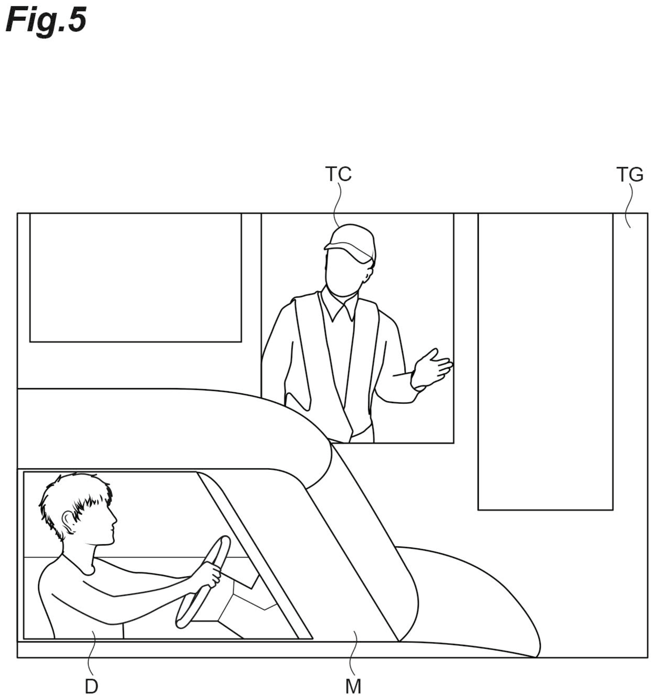

FIG. 5 is a diagram for explaining an example of a voice translation display at a tollgate. FIG. 5 shows a vehicle M, a driver D of the vehicle M, a tollgate TG, and a tollgate staff TC of the tollgate TG. In FIG. 5, it is assumed that the vehicle M is stopped. In the situation shown in FIG. 5, the voice recognition unit 12 recognizes, via the microphone 2, the voice of a call from the tollgate staff TC of the tollgate TG to the driver D of the vehicle M. The voice recognition unit 12 converts the content of the voice from the tollgate staff TC into text data. The voice recognition unit 12 detects at this timing whether or not the voice is in a language other than the user language.

When the voice recognition unit 12 detects speech in a language different from the user language, the translation processing unit 13 translates the speech of the tollgate staff TC into user language content (for example, Japanese). The projection display unit 14 projects the user language content translated by the translation processing unit 13 at a position in front of the driver on the windshield W.

### [Translation information Projection Method For the Vehicle Translation Information Projection System]

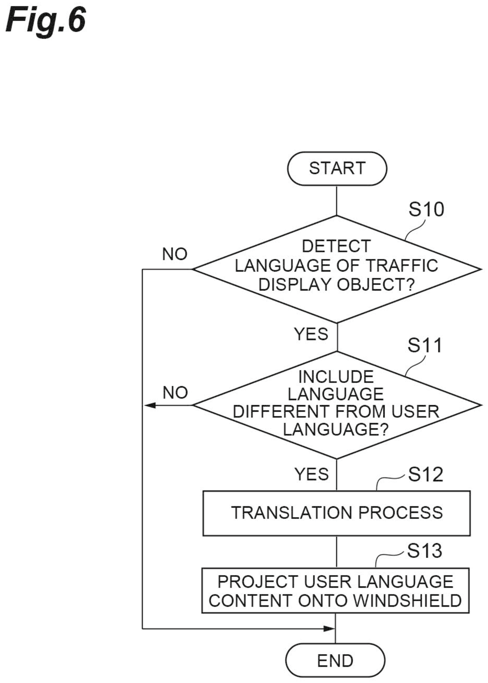

Next, a translation information projection method for the vehicle translation information projection system 100 according to the present embodiment will be described with reference to the drawings. FIG. 6 is a flowchart illustrating an example of a translation information projection process of the vehicle translation information projection system 100.

As shown in FIG. 6, in step S10, the translation ECU 10 of the vehicle translation information projection system 100 detects the language of a traffic display object by the language recognition unit 11. If no language is detected (step S10: NO), the translation ECU 10 ends the current process. If a language is detected (step S10: YES), the translation ECU 10 proceeds to step S11.

In step S11, the translation ECU 10 determines using the language recognition unit 11 whether or not the language of the traffic display object includes a language different from the user language. If a language different from the user language is included (step S11: YES), the translation ECU 10 proceeds to step S12. If a language different from the user language is not included (step S11: NO), the translation ECU 10 ends the current process.

In step S12, the translation ECU 10 translates the language content of the traffic display object into user language content using the translation processing unit 13. Thereafter, in step S13, the translation ECU 10 projects the user language content onto the windshield W of the vehicle using the projection display unit 14. The projection display unit 14 controls the HUD 5 to project the user language content such that it is positioned on or near the traffic display object as viewed from the driver. Thereafter, the translation ECU 10 ends the current process.

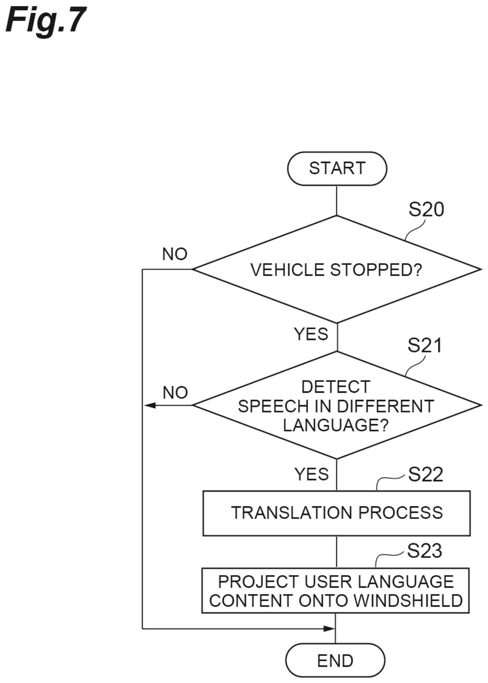

FIG. 7 is a flowchart illustrating an example of a voice translation information projection process of the vehicle translation information projection system. As shown in FIG. 7, in step S20, the translation ECU 10 determines whether the vehicle is stopped. The translation ECU 10 makes the determination based on the vehicle speed information from the vehicle speed sensor 4. If the vehicle is not stopped (step S20: NO), the translation ECU 10 ends the current process. If the vehicle is stopped (step S20: YES), the translation ECU 10 proceeds to step S21.

In step S21, the translation ECU 10 determines whether speech in a language different from the user language is detected using the voice recognition unit 12 through the microphone 2. The voice recognition unit 12 acquires speech through the microphone 2 when a person outside the vehicle speaks to the driver, and determines whether or not the acquired speech is in a language different from the user language. If speech in a different language is detected (step S21: YES), the translation ECU 10 proceeds to step S22. If speech in a different language is not detected (step S21: NO), the translation ECU 10 ends the current process.

In step S22, the translation ECU 10 translates the voice data using the translation processing unit 13. The translation processing unit 13 translates speech in a language different from the user language into user language content as text data. The translation processing unit 13 may be in a mode of further translating it into voice in the user language. Thereafter, the translation ECU 10 proceeds to step S23.

In step S23, the translation ECU 10 projects the user language content onto the windshield W by the projection display unit 14. The projection display unit 14 projects the user language content corresponding to the speech spoken from the outside, for example, at a position in front of the driver on the windshield W or at an end of the windshield W on the driver's seat side. This allows the driver to understand the content even when spoken to from outside the vehicle while stopped.

According to the vehicle translation information projection system 100 according to the present embodiment described above, when the language displayed on a traffic display object is different from the user language, by projecting the translated user language content onto the windshield W on or near the traffic display object as viewed from the driver, the driver can understand the content of the traffic display object indicated in a different language without significantly averting their gaze from the front of the vehicle.

In addition, according to the vehicle translation information projection system, by projecting the user language content onto the windshield W by superimposing it on the language portion so that the projection display unit 14 masks the language portion different from the user language, the driver can visually recognize only the translated information without the original language and the translated language being mixed. This prevents confusion of information and enables the driver to quickly and clearly understand the necessary information. In particular, it can reduce the visual burden and maintain attention during driving.

In addition, according to the vehicle translation information projection system 100, by recognizing speech spoken toward the driver from outside the vehicle while the vehicle is stopped with the voice recognition unit 12 and projecting the translated content of the speech as text in the user language onto the windshield W, the driver can quickly understand the content even when spoken to in a different language and can perform smooth communication.

As described above, according to the present disclosure, it is possible to provide a vehicle translation information projection system that allows a driver to reliably recognize traffic display objects and voice information during a stop in the user language.

Although the embodiments of the present disclosure have been described above, the present disclosure is not limited to the above-described embodiments. The present disclosure can be implemented in various forms with various changes and improvements based on the knowledge of those skilled in the art, including the above-described embodiments.

The vehicle translation information projection system 100 does not necessarily need to support the translation of speech spoken toward the driver from outside the vehicle. The translation ECU 10 need not include the voice recognition unit 12. In this case, the microphone 2 is also unnecessary.

The vehicle translation information projection system 100 may be capable of handling a traffic display object showing symbols or pictograms. The vehicle translation information projection system 100 may project onto the windshield user language content that displays the meaning of the traffic display object in text in the user language, based on image data of the traffic display object including symbols and pictograms and the symbols and pictograms of the traffic display object recognized from the captured image of the front camera 1. The traffic display object including symbols or pictograms can include at least one of a "No Pedestrian Crossing" sign, a "No Entry" sign combining a vehicle silhouette and a red diagonal line, a "One Way" sign using an arrow, a "Road Work Ahead" sign depicting a construction worker's silhouette, a "Alternating One-Way Traffic " sign combining a vehicle silhouette and an arrow, a "Road Closed" sign depicting a barricade silhouette, a "Bicycle Only Lane" road marking depicting a bicycle silhouette, a "Bus Only Lane" road marking depicting a bus silhouette, and the like.

## Claims

1. A vehicle translation information projection system (100) that provides translation information to a driver of a vehicle, the system comprising:
a language recognition unit (11) configured to recognize a language displayed on a traffic display object in an image captured by a front camera (1) of the vehicle;
a translation processing unit (13) configured to translate language content different from a user language on the traffic display object into user language content when the language displayed on the traffic display object is different from a preset user language; and
a projection display unit (14) configured to project information onto a windshield of the vehicle,
wherein the projection display unit (14) projects the user language content onto the windshield such that it is positioned on or near the traffic display object as viewed from the driver of the vehicle.

2. The vehicle translation information projection system (100) according to claim 1, wherein the traffic display object includes at least one of a road sign, a road work sign, a traffic information board, and a road marking.

3. The vehicle translation information projection system (100) according to claim 1, wherein the projection display unit (14) projects the user language content onto the windshield by superimposing it over and masking the language portion different from the user language in the traffic display object as viewed from the driver.

4. The vehicle translation information projection system (100) according to claim 1, further comprising a voice recognition unit (12) configured to recognize speech spoken toward the driver from outside the vehicle while the vehicle is stopped,
wherein the projection display unit (14) projects the speech recognized by the voice recognition unit (12) as text in the user language onto the windshield.

5. A translation information projection method of a vehicle translation information projection system (100) mounted in a vehicle, the method comprising:
recognizing a language displayed on a traffic display object in an image captured by a front camera (1) of the vehicle;
translating language content different from a user language on the traffic display object into user language content when the language displayed on the traffic display object is different from a preset user language; and
projecting the user language content onto the windshield of the vehicle such that it is positioned on or near the traffic display object as viewed from a driver of the vehicle.
